# NEUE EUROPÄISCHE PATENTSCHRIFT

(11) **EP 3 577 365 B2**
(45) Veröffentlichungstag und Bekanntmachung des Hinweises auf die Entscheidung über den Einspruch: **26.08.2026**
(45) Hinweis auf die Patenterteilung: 06.12.2023
(21) Anmeldenummer: 18704172.8
(22) Anmeldetag: 30.01.2018
(51) Int. Cl.: F16D 65/097, F16D 55/228

(54) **STAHLBLECHBÜGELRÜCKSTELLFEDER**
SHEET-STEEL BOW RETURN SPRING
RESSORT DE RAPPEL À ARCEAU EN TÔLE D'ACIER

(30) Priorität: 31.01.2017 DE 102017201553; 13.12.2017 DE 102017222639
(43) Veröffentlichungstag der Anmeldung: 11.12.2019
(73) Patentinhaber: AUMOVIO Germany GmbH, 60488 Frankfurt am Main (DE)
(72) Erfinder: DENHARD, Werner, 61381 Friedrichsdorf (DE); HUMMEL, Valentin, 64625 Bensheim (DE)
(74) Vertreter: Michalski Hüttermann & Partner mbB
(86) Internationale Anmeldenummer: PCT/EP2018/052246
(87) Internationale Veröffentlichungsnummer: WO 2018/141734

(56) Entgegenhaltungen:
- EP-A1- 3 051 164
- DE-U1- 202016 102 686
- JP-A- 2012 072 830
- US-A1- 2004 104 086
- US-A1- 2011 100 767

## Beschreibung

Die Erfindung betrifft eine Verwendung einer Lüftspielfeder sowie eine Anordnung mit einer Lüftspielfeder, Teilbelagscheibenbremsbelägen und benachbarten Reibbelagrückenplatten der Teilbelagscheibenbremsbeläge.

Es ist eine Lüftspielfeder bekannt, die zwei Federschenkel umfasst, die zwischen reibmassefreie Rückenplattenabschnitte schwimmend elastisch eingespannt sind. Derartiges geht exemplarisch aus der DE 43 32 713 A1 hervor und umfasst eine radial offene Schachtaufnahme für bremsscheibenauslaufseitig (gedrückt) abgestützte Scheibenbremsbeläge. Im Schachtfenster des Festsattelbremsgehäuses ist ein Haltebolzen für die Scheibenbremsbeläge lösbar gelagert. Neben dem Haltebolzen, in Richtung bremsscheibeneinlauf versetzt, ist oberhalb der Bremsscheibe eine omegaförmig gebogene, ebene, einstückige Drahtfeder zwischen Scheibenbremsbeläge und Bremsgehäuse derart multilateral eingespannt, dass eine klapperfreie Befederung, einschließlich Lüftspielfunktion, besonders ökonomisch wahrgenommen wird.

Aus der WO 2017036802 A1 geht eine individuelle Lüftspielbefederung für eine besonders leistungsfähig gestaltete Festsattelkraftfahrzeugteilbelagscheibenbremse hervor. Diese umfasst einen bremsscheibeneinlaufseitig gehäusefest arrangierten Tragbolzen zur gezogenen Reibbelagabstützung, und mit einem bremsscheibenauslaufseitig gehäusefesten Führungsbolzen, für asymmetrisch gestaltete Scheibenbremsbeläge. Vier Lüftspielfederanordnungen aus Draht sind im Bereich von Bolzenaufnahmen an jeder Reibbelagrückenplatte fixiert, umklammern den jeweiligen Bolzen, und befedern also den jeweiligen Reibbelag jeweils individuell.

Eine Lüftspielfeder ist auch aus der US 2004104086 A1 bekannt. Die vorliegende Erfindung beruht auf der Aufgabe, eine Verwendung einer Lüftspielfeder sowie eine Anordnung mit einer Lüftspielfeder, Teilbelagscheibenbremsbelägen und benachbarten Reibbelagrückenplatten der Teilbelagscheibenbremsbeläge anzugeben, die eine noch wartungsfreundlichere sowie fertigungsgerechte Schnittstellengestaltung erlaubt, sowie die Nachteile vom Stand der Technik vermeidet. Die Aufgabe wird erfindungsgemäß durch die Gegenstände der unabhängigen Ansprüche gelöst. Zweckmäßige Abwandlungen der Erfindung gehen aus den jeweiligen Merkmalen der abhängigen Ansprüche hervor.

Eine Lüftspielfeder, liegt als einfache Stahlblechbügelfeder vor, und ist geeignet einen Bremsscheibenumfang zwischen Federschenkeln aufzunehmen, und wobei die Stahlblechbügelfeder über einen Jochabschnitt verfügt, der die benachbarten zugeordneten Reibbelagrückenplatten radial außen, oberhalb, übergreift, und mit vom Jochabschnitt im Wesentlichen U-förmig plastisch zueinander parallel versetzt abgebogene elastische Federschenkel, welche die Reibbelagrückenplattenrückseiten an Lagerabschnitten, lateral zur Reibfläche, hintergreifen. Erfindungsgemäß ist erstmals vorgesehen, dass die Federschenkel an jedem Endstück eine Reibbelaghalteklammer ausbilden, und wobei jede Reibbelaghalteklammer zur Fixierung zwischen einem Federschenkel und einem Reibbelag dient, indem die Reibbelaghalteklammer die Reibbelagrückenplatte einspannt. Anhand der angegebenen Mittel wird also eine günstige form- und/oder kraftschlüssige Fixierung zwischen Reibbelaghalteklammer und Reibbelagrückenplatte ermöglicht, und wobei auf eine gesonderte Fixierung, oder zusätzliche Schnittstelle, der Lüftspielfeder verzichtet werden kann. Demzufolge ermöglicht die Erfindung erstmals unter Ausnutzung einer besonders verdichteten Blechflachstahlbauweise eine fertigungs- und beanspruchungsgerecht sowie wartungsfreundlich gestaltete, spanlos dargestellte, Reibbelagrückstellfeder in Stahlblechbügelkonstruktion, die zwecks Serviceerleichterung in Mehrwertfunktion, ggf. unter herstellwerksseitiger Vorkonfektionierung gewissermaßen als "Kassette" (sprich Einbausatz) auf einem Verschleißteilmarkt gesondert ausnutzbar ist.

In besonders raumsparend verdichteter Bauweise sind die streifenförmigen Federschenkel im Wesentlichen parallel zu Gehäuseschenkeln, weitgehend orthogonal zu einer Bremskolbenachse ausgerichtet, und liegen folglich weitgehend parallel zu Reibflächen einer Bremsscheibe vor. Ein flacher zentraler Jochabschnitt ist im Wesentlichen parallel zu einem Gehäusebrückenabschnitt, axial gerichtet dazu vorgesehen, um einen Umfang einer Bremsscheibe zu übergreifen, und wobei die Federschenkel über den Jochabschnitt elastisch federnd zwischen die Reibbelagrückenplatten der Scheibenbremsbeläge schwimmend eingespannt sind.

Verwechslung beziehungsweise Fehlmontage ist konstruktiv ausgeschlossen, indem jede Festsattelkraftfahrzeugteilbelagscheibenbremse über genau zwei Lüftspielfedern mit unterschiedlicher lang gestalteten Federschenkeln verfügt, welche an die bremsscheibeneinlaufseitige oder bremsscheibenauslaufseitige Platzierung angepasst sind, und wobei die beiden unterschiedlichen Lüftspielfedern über weitestgehend identisch abgestimmte Rückstellfederkraft verfügen.

Eine besonders verdichtete Bauweise wird ermöglicht, indem der Jochabschnitt der beiden Rückstellfedern jeweils bremsscheibeneinlaufseitig und bremsscheibenauslaufseitig in gesonderten Gehäusebrückenfenstern arrangiert ist.

Indem die Reibbeläge eines Reibbelagsatzes unter Vermittlung durch die Lüftspielfedern parallel zueinander sowie in vorgegebenem Abstand relativ zueinander fixiert und dennoch elastisch in den Bolzenführungen im Festsattelbremsgehäuse gelagert sind, und wobei die Lüftspielfedern über die Reibbeläge formschlüssig sowie verliersicher im Festsattelbremsgehäuse gelagert sind, wird eine gesonderte Gehäusefixierung der Lüftspielfedern rationalisiert. Zudem wird eine besonders servicefreundliche, vorkonfektionierte, Vermarktung als Verschleißteilkit ermöglicht.

Die Lüftspielfeder in der vorteilhaft schlanken, und nebenbei auch aerodynamisch günstigen, Stahlblechflachbauweise liegt einstückig als Stahlblechbügelfeder vor, welche über einen weitgehend streifenförmig-flachen Jochabschnitt verfügt, und mit endseits des Jochabschnitts im Wesentlichen U-förmig zueinander parallel versetzt abgebogenen Federschenkeln.

Zu ihrer zweckmäßig sowie fertigungsgerecht gelösten Fixerung/ Lagerung verfügt jede Lüftspielfeder über Federschenkel die zueinander parallel gegenüberliegend, mit vorgegebenem Abstand distanziert, Rücken an Rücken geschlossen, sowie nach axial außen zur Aufnahme von Rückenplattenvorsprüngen zumindest teilweise geöffnet vorliegen, und wobei die Reibbelaghalteklammern die Rückenplattenvorsprünge auf wenigstens drei Seiten kassettenartig umgreifen.

Beispielsweise zur Spielvermeidung, Vermeidung von Klappergeräuschen mittels Befederung, oder in schlichter Abstimmung als Geräuschdämpfungsmaßnahme zwischen Reibbelag und Bolzenlager ist es vorteilhaft, wenn jede Reibbelaghalteklammer eine Tasche zur federnden,elastischen Aufnahme des Halte- bzw. Führungsbolzens integriert.

Die grundsätzliche Geometrie der Lüftspielfeder in der erfindungsgemäß flach-verdichteten Stahlblechbügelgestaltung ist so definiert, dass Federschenkel und Jochabschnitt längs einer gemeinsamen Flucht/Längsachse zueinander symmetrisch vorgesehen sind. Dabei sind die Reibbelaghalteklammern am Ende der Federschenkel mit einheitlicher axialer Flucht zueinander parallel mit Abstand distanziert versetzt arrangiert. Mit anderen Worten sind die beiden Reibbelaghalteklammern jeder Lüftspielfeder zueinander spiegelbildlich, parallelversetzt, vorgesehen.

Zusammenfassend ermöglicht die vorliegende Erfindung also eine ebenso verdichtete wie auch leistungsstarke Bauweise in Gestalt von einem erleichtert austauschbaren Servicekit, und wobei der notwendige Einbauraum der Rückstellfeder die Leistungsfähigkeit der Bremse keineswegs beeinträchtigt. Weitere Einzelheiten der Erfindung gehen aus der Beschreibung anhand der Zeichnung hervor.

Die Zeichnung zeigt im Einzelnen:
Fig. 1 perspektivisch verkleinerte Prinzipansicht einer Kraftfahrzeugfestsattelteilbelagscheibenbremse mit erfindungsgemäßer Lüftspielfeder,
Fig. 2 Draufsicht auf die Kraftfahrzeugfestsattelteilbelagscheibenbremse nach Fig. 1,
Fig. 3 Längsschnitt durch die Festsattelkraftfahrzeugteilbelagscheibenbremse nach Fig. 1 + 2,
Fig. 4 einbaufertig vorassemblierter Reibbelageinbausatz umfassend einen Austauschreibbelagsatz mit zwei Lüftspielfedern, inetwa maßstabsgerecht,
Fig. 5-9 eine auslaufseitig (kurzschenklig) arrangierte Lüftspielfeder in verschiedenen Ansichten und Maßstäben,
Fig. 10 Stahlblechhalbzeugstreifenbild mit projizierter Abwicklung der auslaufseitig (kurzschenklig) arrangierten Lüftspielfedern, inetwa maßstabsgerecht,
Fig. 11-13 eine einlaufseitig (langschenklig) arrangierte Lüftspielfeder in verschiedenen Ansichten und Maßstäben.

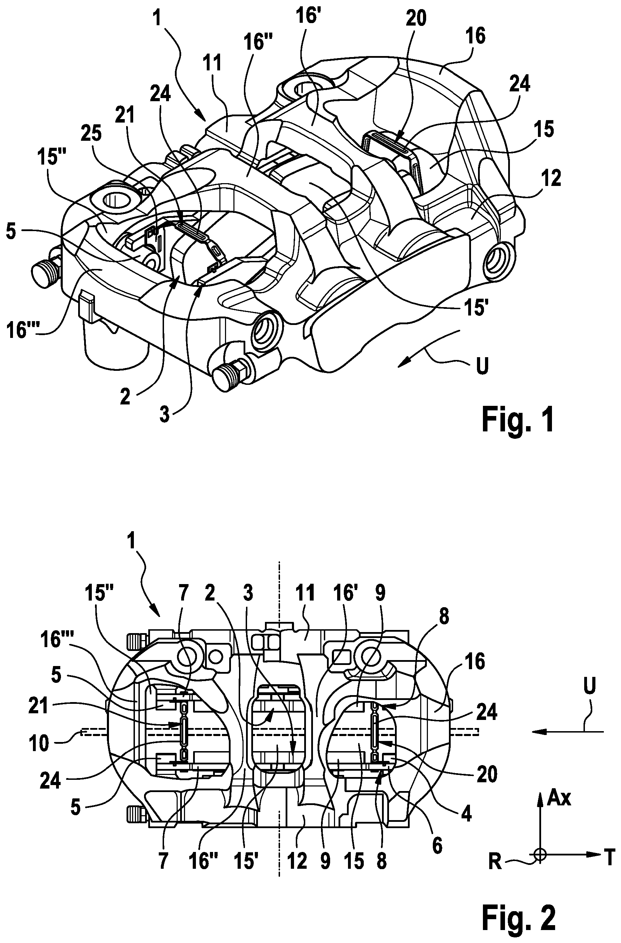

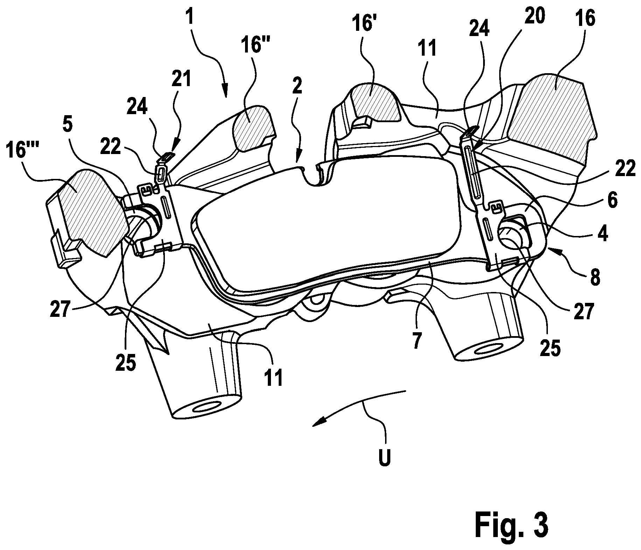

Eine effiziente Festsattelkraftfahrzeugteilbelagscheibenbremse 1 umfasst nach Fig. 1 - 3 Reibbeläge 2,3 in gehäusefesten Bolzenlagern 3 (Haltebolzen 4, Führungsbolzen 5), wobei die Tangentialkraft (Bremskraft) jedes Reibbelags 2,3 über einen Rückenplattenlagervorsprung 6, 6' ausgehend von einer Rückenplatte 7 des Scheibenbremsbelags 2,3 ohne Ortswechsel (bezogen auf den Ort der Krafteinleitung nach einem Fahrtrichtungswechsel) immer über ein zentral definiert vorgegebenes Festlager 8, auf einen einzigen gehäusefesten Haltebolzen 4 übertragen wird. Die fixe Festlagerallokation erfolgt sowohl für Vorwärts- als auch für Rückwärtsfahrt. Die Rückenplatte 7 ist asymmetrisch geformt und trägt auf einer Front/Vorderseite eine gesinterte Reibwerkstoffmischung 9.

Stirnseitig sowie deutlich unterhalb von Zentrum Z / Kolbenmitte K 1, K 2 ist das Festlager 8 allokiert. Für die Vorzugsdrehrichtung (Vorwärtsfahrt) U einer Bremsscheibe 10 ist festgelegt, dass das Festlager 8 bremsscheibeneinlaufseitig platziert ist und entsprechend umgekehrt verhält es sich für die sekundäre Drehrichtung (Rückwärtsfahrt). In der Hauptdrehrichtung (Vorwärtsfahrt) U ist die Rückenplatte 7 also durch das gebildete Festlager 8 vorwiegend unter Zugbeanspruchung abgestützt. In rückwärtiger Drehrichtung (Rückwärtsfahrt) erfolgt die Abstützung der Rückenplatte 7 über dasselbe Festlager 8, jedoch vorwiegend unter Druckbeanspruchung der Rückenplatte 7. Der Führungsbolzen 5 dient also als immer nur als Spurlager bzw. als Drehsperre für den Scheibenbremsbelag 2, 3, ist weitgehend frei von Tangentialbremskräften, so dass prinzipiell keine besonders massive Gestaltung erforderlich ist, und die Beanspruchung vom Führungsbolzen 5 ist deutlich reduziert. Also kann dessen Effizienz gesteigert sein, wenn dessen Querschnitt d kleiner ausgeführt ist als der Querschnitt vom Haltebolzen 4 und Werkstoffbedarf ist reduziert. In Vervollkommnung einer Festsattelkraftfahrzeugteilbelagscheibenbremse 1 ist es möglich, die Bolzen 4,5 an jedem Gehäuseschenkel 11,12 einstückig mit dem Gehäuse, also gießtechnisch, auszubilden.

Ein gabelzinkenförmig offen gestalteter Rückenplattenlagervorsprung 6' mit Maulöffnung und Aufnahmetasche 13 zur Aufnahme vom Führungsbolzen 5 ist auf der dem Festlager gegenüber liegenden Stirnseite sowie vorzugsweise radial oberhalb vom Zentrum/Reibbelagzentrum Z auslaufseitig an der Rückenplatte 7 platziert. Die offene Gestaltung ermöglicht eine einfache Einschwenkmontage zwischen Gehäuse mit Führungsbolzen 5 und Scheibenbremsbelag 2,3.

Der im Querschnitt vorzugsweise weitgehend kreisringförmige Haltebolzen 4 durchgreift eine Durchgangsöffnung 14 des Rückenplattenlagervorsprungs 6 vollständig. Die Mantelfläche der Durchgangsöffnung 14 kann zwecks Reduktion von gegenseitigen Kontaktnormalspannungen in der Kontur derart gekrümmt an die weitgehend kreisringförmige Oberflächenkrümmung des Haltebolzens 4 angeschmiegt ausgeformt sein, dass zwischen Haltebolzen 4 und Rückenplattenlagervorsprung 6 einerseits ein möglichst reibungsarmer Kontakt vorliegt, und wobei andererseits eine möglichst verschleiß- und bewitterungsresistente, wartungsfreie Lagerung zwischen Scheibenbremsbelag 2,2/ Rückenplatte 7 und Haltebolzen 4 vorliegt.

Die jeweils einseitig an jeder Rückenplatte 7 asymmetrisch versetzt zueinander vorgesehenen Halte- bzw. Führungsvorsprünge 6,6' eliminieren durch konsequente Aufgabentrennung Redundanzen. Die Ausnutzung der Rückenplatte 7 als Reibbelagträger, also die nutzbare Reiboberfläche ist verbessert. Dies wird begleitet von einer verbesserten Skalierbarkeit zwischen der Größe der Rückenplatte 7, der nutzbaren Reiboberfläche und der möglichen Kolbenauflagen/Anzahl der Kolben. Durch stirnseitig diametral gegenüberliegende sowie zusätzlich diagonal versetzte Reibbelagabstützung erfolgt eine Verbesserung des NVH-Verhaltens.

Die Ausgestaltung des Festsattelgehäuses ist vorzugsweise brückenseitig offen mit Gehäusebrückenfenstern 15,15',15" gestaltet, um eine verbesserte Durchlüftung und Kühlung der Radbremsanlage zu ermöglichen. Dabei ist es grundsätzlich möglich, dass ein oder mehrere Brückenfenster 15,15',15" im Wechsel mit entsprechenden Brückenabschnitten 16,16',16"' vorliegen, welche die beiden Gehäuseschenkel 11,12 miteinander verbinden. Brückenfenster 15,15',15" können Federmittel (Topspring) aufnehmen, die jeweils radial elastisch vorgespannt zwischen der Rückenplatte 7 vom Scheibenbremsbelag 2,3 und Brückenabschnitt 16,16",16" eingespannt sind, und jeweils eine radial einwärts oder radial auswärts gerichtete elastische Vorspannung zwischen Scheibenbremsbelag 2,3 und Gehäuse ermöglichen.

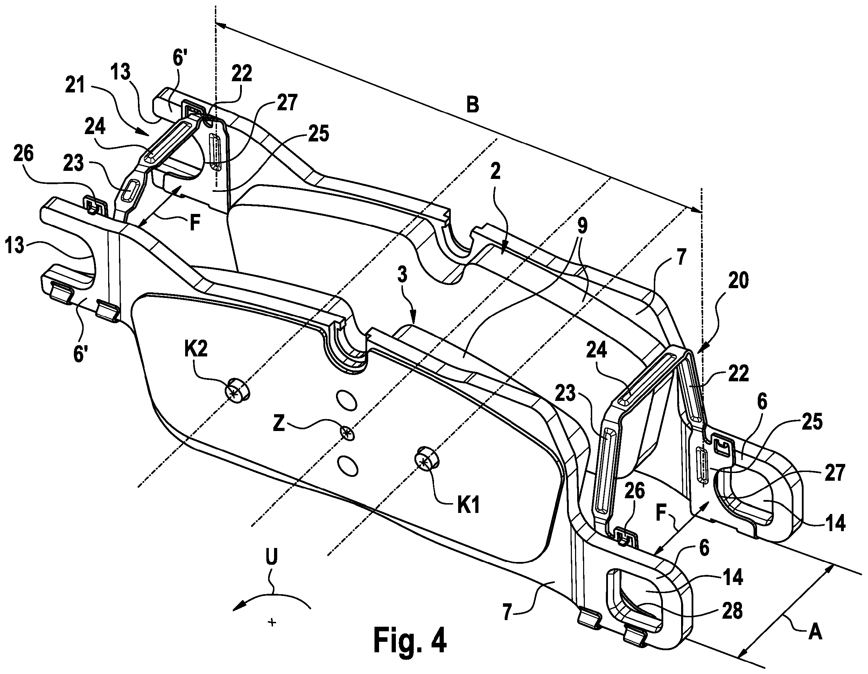

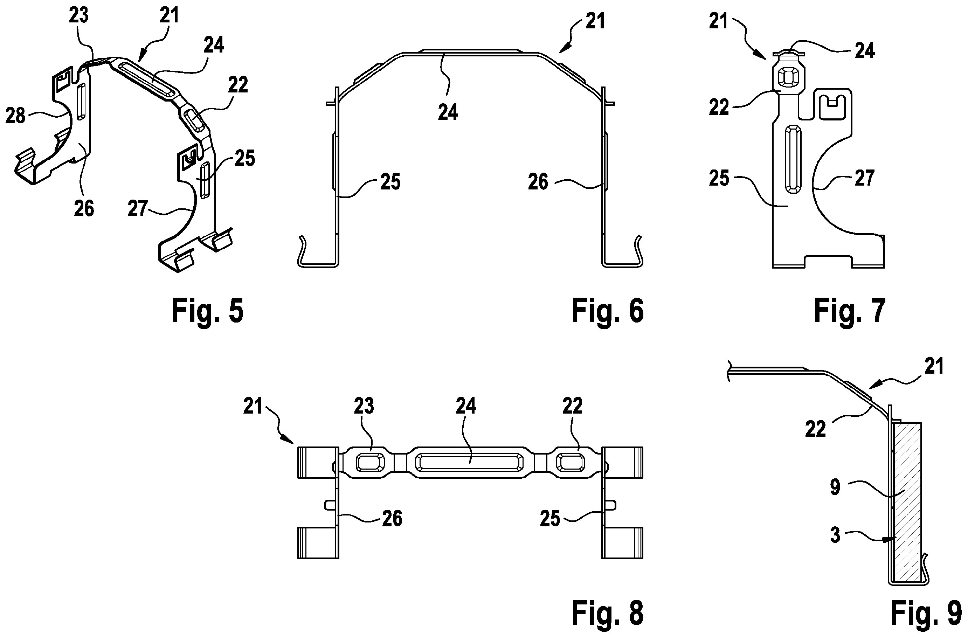

In Verbindung mit den vorstehenden, grundsätzlichen Erläuterungen und Wirkprinzipien ergeht die nachstehende Beschreibung der Zeichnung, Fig. 1-13, betreffend eine besonders bevorzugte Ausführungsform einer erfindungsgemäßen Verbesserungsmaßnahme.

Dabei ist eine Lüftspielfeder 20,21 als Stahlblechbügelfeder definiert sowie schwimmend elastisch zwischen die benachbart gegenüberliegenden Reibbelagrückenplatten 7 eingespannt. Durch die komprimierte U-förmige Stahlblech-Bügelbauform und Platzierung wird es einerseits ermöglicht, dass sowohl eine lediglich sinnbildlich dargestellte Bremsscheibe 10, wie auch die zueinander benachbarten Reibbeläge 2,3 zwischen zueinander parallel versetzt abgebogenen Federschenkeln 22,23 aufgenommen sind, und wobei der axial gerichtete Jochabschnitt 24, welcher die Federschenkel 22,23 miteinander verbindet, sowohl die Bremsscheibe 10 wie auch die Bremsbeläge 2,3 radial außen oberhalb von einem maximierten Reibradius sehr raumsparend übergreift. Die Enden der beiden prinzipiell flach gehaltenen Federschenkel 22,23 bilden ebenso raumsparende, wie flache Schnittstellen für die Rückenplattenlagervorsprünge 6,6' aus, indem diese die Reibbelagrückenplattenrückseite im Bereich der Lagerabschnitten, seitlich der Bremsscheibe 10, hintergreifen. Dabei sind die Federschenkel 22,23 im Wesentlichen parallel zu den Gehäuseschenkeln 11,12 mit ihren Aktuatoren (Bremkolben), und weitgehend orthogonal zu einer diesbezüglichen Aktuator/Bremskolbenachse gerichtet, sowie weitgehend parallel zu Reibflächen der Bremsscheibe 10 arrangiert.

Wie aus den Fig. 1-3 erhellt verfügt jede Festsattelkraftfahrzeugteilbelagscheibenbremse über zwei besonders raumsparend ausgebildete, sowie raumsparend im Gehäuse aufgenommene Lüftspielfedern 20,21 mit unterschiedlicher lang gestalteten Federschenkeln 22,23, und wobei beide Lüftspielfedern 20,21 über weitestgehend identisch abgestimmte Rückstellfederkraft verfügen. Ein zusätzlicher Raumsparbeitrag wird erschlossen, indem die Jochabschnitte 24 der beiden Rückstellfedern 20,21 jeweils bremsscheibeneinlaufseitig und auch bremsscheibenauslaufseitig in gesonderten Gehäusebrückenfenstern 15,15"' arrangiert sind. Demzufolge wird die freie Auslegung der Festsattelkraftfahrzeugteilbelagscheibenbremse 1 in Bezug auf einen weitgehend maximiert ausgenutzten Bremsscheibendurchmesser bei beschränktem Radfelgeneinbauraum in einem biegekritischen Bereich der Brückenabschnitte 16,16',16"' positiv unterstützt.

Die Wirkung erfindungsgemäßer Lüftspielfedern 20,21 in deren Interaktion mit zugeordneten Reibbelägen 2,3 bezieht sich des weiteren darauf, dass dieser Reibbelagsatz unter Vermittlung durch die Lüftspielfedern 20,21 parallel zueinander sowie in vorgegeben definiertem Abstand A zueinander elastisch im Festsattelbremsgehäuse unter der Rückstellfederkraft F arrangiert ist, und wobei die Lüftspielfedern 20,21 ohne gesonderte Fixierung, mittelbar über ihre Lagerung an den beiden Reibbeläge 2,3 formschlüssig sowie verliersicher im Festsattelbremsgehäuse gelagert sind. Weil die Lüftspielfedern 20,21 grundsätzlich vom Gehäuse entkoppelt sind, ist deren Rückstelleffizienz entsprechend hoch.

Die Federschenkel 22,23 jeder Lüftspielfeder 20,21 verfügen an einem Endstück zur lösbaren Kupplung über eine vorteilhafte Reibbelagschnittstelle die als Reibbelaghalteklammer 25,26 ausgebildet ist, und wobei jede Reibbelaghalteklammer 25,26 zur Fixierung zwischen einem Federschenkel 22,23 und einem Reibbelag 2,3 dient, indem die Reibbelaghalteklammer 25,26 die Reibbelagrückenplatte 7 einspannt. Dazu kann die Reibbelaghalteklammer 25,26 die Rückenplatte 7 zumindest teilweise formschlüssig umgreifen. Eine besonders vorteilhafte bevorzugte Ausgestaltung definiert, dass die Reibbelaghalteklammern 25,26 jeder Lüftspielfeder 20,21 zueinander parallel gegenüberliegend, mit vorgegebenem Abstand distanziert, Rücken an Rücken geschlossen, sowie nach axial außen zur Aufnahme von den Rückenplattenlagervorsprüngen 6,6' zumindest teilweise geöffnet vorliegt, und wobei jede Reibbelaghalteklammer 25,26 einen Rückenplattenlagervorsprung 6,6' auf wenigstens drei Seiten kassettenartig umgreift.

Eine weitere Adaption erstreckt sich auf eine Halte- bzw. Führungsbolzenintegration, indem eine Reibbelaghalteklammer 25,26 über eine Tasche 27,28 zur Integration eines Halte- bzw. Führungsbolzens 4,5 verfügt. Eine entsprechende Gestaltung bzw. Tolerierung dieser Integration kann die Mehrwertfunktion ermöglichen, dass mit der Integration eine gegenseitige elastische Befederung, Einspannung oder ähnliches im Sinne einer Spiel- oder Geräuschvermeidungsmaßnahme zwischen Bolzen und Lüftspielfeder 20,21 einschließlich Reibbelag 2,3 einhergeht. Demzufolge sind Klappergeräusche im Bereich der Reibbelaglagerung ausgeschlossen.

Wie der Zeichnung im Übrigen zu entnehmen ist, sind Federschenkel 22,23 und Jochabschnitt 24 längs einer gemeinsamen Flucht/Längsachse zueinander symmetrisch vorgesehen, bzw. die Reibbelaghalteklammer 25,26 ist in axial gemeinsamer Flucht/Längsachse parallel versetzt vorgesehen. Demzufolge sind die beiden Reibbelaghalteklammern 25,26 jeder Lüftspielfeder 20,21 zueinander spiegelbildlich, parallelversetzt, vorgesehen.

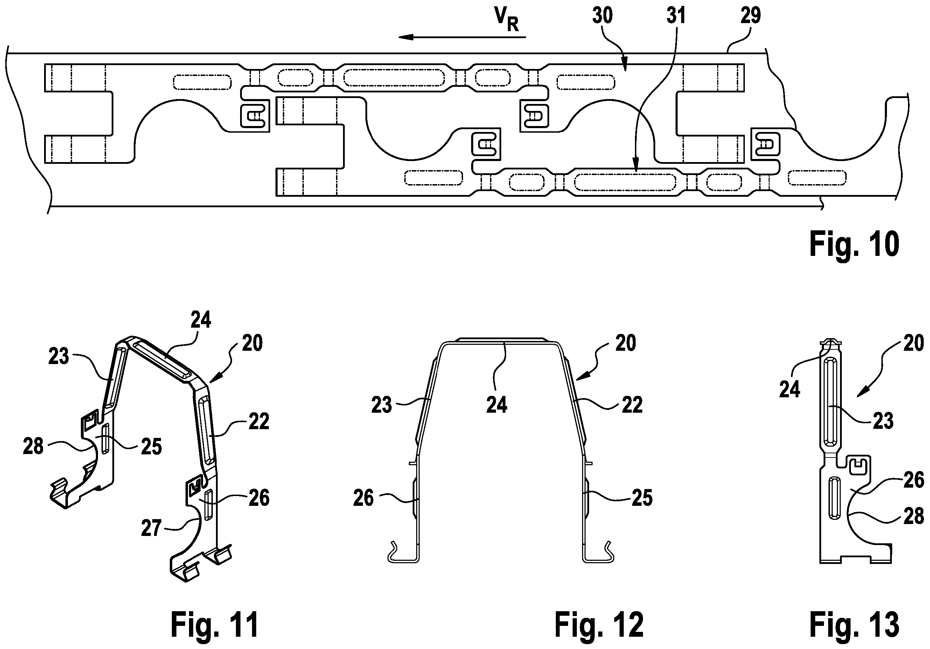

Die besonders effziente, fertigungsgerecht-blechverschnittreduzierte, also werkstoffsparend-ökonomische Gestaltung der erfindungsgemäßen Lüftspielfeder 20,21 mit Stahlblechbügeldesign erhellt beispielhaft aus den teilweise rudimentär angedeuteten Rohteilabwicklungen 30, 31 in Projektion auf einen Stahlblechhalbzeugstreifen 29 nach der Fig. 10. Denn durch die in Längsachse L asymmetrisch geteilte Federabwicklung für die verschiedenen Federrohlinge wird eine beispielhaft verdichtete, ineinandergreifend-versetze Rohteilplatzierung zur Reduktion von Stahlblechstanzabfall ermöglicht, wie aus dem Streifenbild nach Fig. 10 unmittelbar hervorgeht. Diese vorteilhafte Wirkung wird hauptsächlich auch dadurch erzielt, dass ein vergleichsweise lang und schmal konstruierter Jochabschnitt 24 zwischen zwei Reibbelaghalteklammern 25,26 zwecks Verschnittvermeidung die grundsätzliche Möglichkeit erteilt, zur lateral versetzten Anordnung anderer Werkstückbereiche, nämlich als Grundlage für die Darstellung anderer Reibbelaghalteklammern, herangezogen zu werden, sowie umgekehrt. Mit anderen Worten wird der bereitgestellte laterale Freiraum neben einem Jochabschnitt 24 in einer Abwicklung/Blechstreifenbild für die Platzierung von komplementären Bereichen anderer Rohteile reserviertr/ausgenutzt, aus denen beispielweise die Reibbelaghalteklammern 25,26 anderer Lüftspielfedern ausgeformt werden. Es ist insbesondere möglich, dass alle Reibbelaghalteklammern im Einklang mit prinzipiell gleichgroß (genormt) dimenisionierten Schnittstellen an Rückenplattenlagervorsprüngen 6,6' weitestgehend identisch konstruiert sind, so dass sich die verschiedenen Lüftspielfedern 20,21 im Wesentlichen ausschließlich untereinander durch die Länge ihrer Federschenkel 22,23 bzw. Jochabschnitt 24 voneinander unterscheiden. Auch wenn die Fig. 10 sinnbildlich zwei aufeinanderfolgende, identische, Abwicklungen zur Ausbildung identisch großer Lüftspielfedern 20 bzw. 21 darstellen soll, ist es möglich, dass in Halbzeugvorschubrichtung Vr jeweils abwechselnd eine große Lüftspielfeder auf eine klein dimensionierte Lüftspielfeder folgt, sowie umgekehrt.

### Bezugszeichenliste

- 1: Festsattelkraftfahrzeugteilbelagscheibenbremse
- 2: Reibbelag
- 3: Reibbelag
- 4: Haltebolzen
- 5: Führungsbolzen
- 6: Rückenplattenlagervorsprung
- 7: Rückenplatte
- 8: Festlager
- 9: Reibwerkstoffmischung
- 10: Bremsscheibe
- 11: Gehäuseschenkel
- 12: Gehäuseschenkel
- 13: Aufnahmetasche
- 14: Durchgangsöffnung
- 15,15',15": Gehäusebrückenfenster
- 16,16',16",16": (Gehäuse-)Brückenabschnitt

- 20: Lüftspielfeder
- 21: Lüftspielfeder
- 22: Federschenkel
- 23: Federschenkel
- 24: Jochabschnitt
- 25: Reibbelaghalteklammer
- 26: Reibbelaghalteklammer
- 27: Tasche
- 28: Tasche
- 29: Stahlblechhalbzeugstreifen
- 30: Federrohteilabwicklung
- 31: Federrohteilabwicklung

- A: Abstand
- Ax: Axialrichtung
- F: Federrückstellkraftwirkung
- R: Radialrichtung
- T: Tangentialrichtung
- K1,K2,: Aktuatorverschiebeachse/Kolbenachse
- U: Bremsscheibenvorzugsdrehrichtung (bei Vorwärtsfahrt)
- Z: Reibbelagzentrum

## Patentansprüche

1. Verwendung einer Lüftspielfeder (20,21) mit zwei Federschenkeln (22,23) zwecks elastisch federnd gelagerter Einspannung zwischen zwei benachbarte Reibbelagrückenplatten (7) von Teilbelagscheibenbremsbelägen (2,3), wobei die Lüftspielfeder (20,21) einstückig als Stahlblechbügelfeder vorliegt, welche über einen Jochabschnitt (24) verfügt, und mit endseits des Jochabschnitts (24) im Wesentlichen U-förmig zueinander parallel versetzt abgebogenen Federschenkeln (22,23), wobei die Federschenkel (22,23) an jedem Endstück eine Reibbelaghalteklammer (25,26) ausbilden, und wobei jede Reibbelaghalteklammer (25,26) zur Fixierung zwischen einem Federschenkel (22,23) und einem Reibbelag (2,3) dient, **dadurch gekennzeichnet, dass** die Reibbelaghalteklammer (25,26) die Reibbelagrückenplatte (7) einspannt.

2. Verwendung nach Anspruch 1, **dadurch gekennzeichnet, dass** jede Reibbelaghalteklammer (25,26) formschlüssig an einer Reibbelagrückenplatte (7) fixiert ist.

3. Verwendung nach Anspruch 1 oder 2, **dadurch gekennzeichnet, dass** die Reibbelaghalteklammern (25,26) jeder Lüftspielfeder (20,21) zueinander parallel gegenüberliegend, mit vorgegebenem Abstand distanziert, Rücken an Rücken geschlossen, sowie nach axial außen zur Aufnahme von Rückenplattenlagervorsprüngen (6,6') zumindest teilweise geöffnet vorliegen, und wobei die Reibbelaghalteklammern (25,26) die Rückenplattenlagervorsprünge (6,6') auf wenigstens drei Seiten kassettenartig umgreifen.

4. Verwendung nach einem oder mehreren der Ansprüche 1 - 3, **dadurch gekennzeichnet, dass** jeder Reibbelaghalteklammer (25,26) über eine Tasche (27,28) zur Integration eines Haltebolzens (4) oder eines Führungsbolzens (5) verfügt.

5. Verwendung nach einem oder mehreren der Ansprüche 1 - 4, **dadurch gekennzeichnet, dass** Federschenkel (22,23) und Jochabschnitt (24) längs einer gemeinsamen Flucht/Längsachse zueinander symmetrisch vorgesehen sind.

6. Verwendung nach einem oder mehreren der Ansprüche 1 - 5, **dadurch gekennzeichnet, dass** die Reibbelaghalteklammern (25,26) in Relation zu einer gemeinsamen Flucht/Längsachse parallel versetzt vorgesehen sind.

7. Verwendung nach Anspruch 6, **dadurch gekennzeichnet, dass** die beiden Reibbelaghalteklammern (25,26) jeder Lüftspielfeder (20,21) zueinander spiegelbildlich, parallelversetzt, vorgesehen sind.

8. Anordnung mit einer Lüftspielfeder (20,21), Teilbelagscheibenbremsbelägen (2,3) und benachbarten Reibbelagrückenplatten (7) der Teilbelagscheibenbremsbeläge (2,3), wobei die Lüftspielfeder (20,21) mit zwei Federschenkeln (22,23) zwecks elastisch federnd gelagerter Einspannung zwischen den beiden benachbarten Reibbelagrückenplatten (7) der Teilbelagscheibenbremsbeläge (2,3) versehen ist, wobei die Lüftspielfeder (20,21) einstückig als Stahlblechbügelfeder vorliegt, welche über einen Jochabschnitt (24) verfügt, und mit endseits des Jochabschnitts (24) im Wesentlichen U-förmig zueinander parallel versetzt abgebogenen Federschenkeln (22,23), wobei die Federschenkel (22,23) an jedem Endstück eine Reibbelaghalteklammer (25,26) ausbilden, und wobei jede Reibbelaghalteklammer (25,26) zur Fixierung zwischen einem Federschenkel (22,23) und einem Reibbelag (2,3) dient, **dadurch gekennzeichnet, dass** die Reibbelaghalteklammer (25,26) die Reibbelagrückenplatte (7) einspannen.

9. Anordnung nach Anspruch 8, **dadurch gekennzeichnet, dass** jede Reibbelaghalteklammer (25,26) formschlüssig an einer Reibbelagrückenplatte (7) fixiert ist.

10. Anordnung nach Anspruch 8 oder 9, **dadurch gekennzeichnet, dass** die Reibbelaghalteklammern (25,26) jeder Lüftspielfeder (20,21) zueinander parallel gegenüberliegend, mit vorgegebenem Abstand distanziert, Rücken an Rücken geschlossen, sowie nach axial außen zur Aufnahme von Rückenplattenlagervorsprüngen (6,6') zumindest teilweise geöffnet vorliegen, und wobei die Reibbelaghalteklammern (25,26) die Rückenplattenlagervorsprünge (6,6') auf wenigstens drei Seiten kassettenartig umgreifen.

11. Anordnung nach einem oder mehreren der Ansprüche 8 - 11, **dadurch gekennzeichnet, dass** jeder Reibbelaghalteklammer (25,26) über eine Tasche (27,28) zur Integration eines Haltebolzens (4) oder eines Führungsbolzens (5) verfügt.

12. Anordnung nach einem oder mehreren der Ansprüche 8 - 11, **dadurch gekennzeichnet, dass** Federschenkel (22,23) und Jochabschnitt (24) längs einer gemeinsamen Flucht/Längsachse zueinander symmetrisch vorgesehen sind.

13. Anordnung nach einem oder mehreren der Ansprüche 8 - 12, **dadurch gekennzeichnet, dass** die Reibbelaghalteklammern (25,26) in Relation zu einer gemeinsamen Flucht/Längsachse parallel versetzt vorgesehen sind.

14. Anordnung nach Anspruch 13, **dadurch gekennzeichnet, dass** die beiden Reibbelaghalteklammern (25,26) jeder Lüftspielfeder (20,21) zueinander spiegelbildlich, parallelversetzt, vorgesehen sind.

## Claims

1. Use of a clearance spring (20, 21) with two spring legs (22, 23) for the purpose of elastically resiliently mounted clamping-in between two adjacent friction-lining backing plates (7) of partial-lining disc brake linings (2, 3), wherein the clearance spring (20, 21) is provided in one piece as a sheet-steel bow spring which has a yoke portion (24), and with spring legs (22, 23) which are bent away at the end sides of the yoke portion (24) in a substantially U-shaped manner so as to be offset parallel to one another, wherein the spring legs (22, 23) form a friction-lining retaining clip (25, 26) on each end piece, and wherein each friction-lining retaining clip (25, 26) serves for fixing between a spring leg (22, 23) and a friction lining (2, 3), **characterized in that** the friction-lining retaining clip (25, 26) clamps in the friction-lining backing plate (7).

2. Use according to Claim 1, **characterized in that** each friction-lining retaining clip (25, 26) is fixed in a form-fitting manner to a friction-lining backing plate (7).

3. Use according to Claim 1 or 2, **characterized in that** the friction-lining retaining clips (25, 26) of each clearance spring (20, 21) are provided opposite and parallel to one another, spaced apart by a specified distance, closed back to back, and at least partially open axially outwardly for receiving backing-plate bearing projections (6, 6'), and wherein the friction-lining retaining clips (25, 26) engage in the manner of a cassette around the backing-plate bearing projections (6, 6') on at least three sides.

4. Use according to one or more of Claims 1-3, **characterized in that** each friction-lining retaining clip (25, 26) has a pocket (27, 28) for integrating a retaining pin (4) or a guide pin (5).

5. Use according to one or more of Claims 1-4, **characterized in that** spring legs (22, 23) and yoke portion (24) are provided symmetrically with respect to one another along a common alignment/longitudinal axis.

6. Use according to one or more of Claims 1-5, **characterized in that** the friction-lining retaining clips (25, 26) are provided with a parallel offset in relation to a common alignment/longitudinal axis.

7. Use according to Claim 6, **characterized in that** the two friction-lining retaining clips (25, 26) of each clearance spring (20, 21) are provided with a parallel offset and in a mirror-image manner with respect to one another.

8. An assembly with a clearance spring (20, 21), partial-lining disc brake linings (2, 3) and adjacent friction-lining backing plates (7) of the partial-lining disc brake linings (2, 3), wherein the clearance spring (20, 21) is provided with two spring legs (22, 23) for the purpose of elastically resiliently mounted clamping-in between the two adjacent friction-lining backing plates (7) of the partial-lining disc brake linings (2, 3), wherein the clearance spring (20, 21) is provided in one piece as a sheet-steel bow spring which has a yoke portion (24), and with spring legs (22, 23) which are bent away at the end sides of the yoke portion (24) in a substantially U-shaped manner so as to be offset parallel to one another, wherein the spring legs (22, 23) form a friction-lining retaining clip (25, 26) on each end piece, and wherein each friction-lining retaining clip (25, 26) serves for fixing between a spring leg (22, 23) and a friction lining (2, 3), **characterized in that** the friction-lining retaining clip (25, 26) clamp in the friction-lining backing plate (7).

9. The assembly according to Claim 8, **characterized in that** each friction-lining retaining clip (25, 26) is fixed in a form-fitting manner to a friction-lining backing plate (7).

10. The assembly according to Claim 8 or 9, **characterized in that** the friction-lining retaining clips (25, 26) of each clearance spring (20, 21) are provided opposite and parallel to one another, spaced apart by a specified distance, closed back to back, and at least partially open axially outwardly for receiving backing-plate bearing projections (6, 6'), and wherein the friction-lining retaining clips (25, 26) engage in the manner of a cassette around the backing-plate bearing projections (6, 6') on at least three sides.

11. The assembly according to one or more of Claims 8-11, **characterized in that** each friction-lining retaining clip (25, 26) has a pocket (27, 28) for integrating a retaining pin (4) or a guide pin (5).

12. The assembly according to one or more of Claims 8-11, **characterized in that** spring legs (22, 23) and yoke portion (24) are provided symmetrically with respect to one another along a common alignment/longitudinal axis.

13. The assembly according to one or more of Claims 8-12, **characterized in that** the friction-lining retaining clips (25, 26) are provided with a parallel offset in relation to a common alignment/longitudinal axis.

14. The assembly according to Claim 13, **characterized in that** the two friction-lining retaining clips (25, 26) of each clearance spring (20, 21) are provided with a parallel offset and in a mirror-image manner with respect to one another.

## Revendications

1. Utilisation d'un ressort d'espacement (20, 21) avec deux branches de ressort (22, 23) à des fins de fixation par serrage montée de façon résiliente et élastique entre deux plaques de support à garniture de friction (7) adjacentes de garnitures de frein à disque à garniture partielle (2, 3), dans laquelle le ressort d'espacement (20, 21) est pourvu d'une seule pièce en tant que ressort en arc en tôle d'acier qui a une partie de collet (24), et avec des branches de ressort (22, 23) qui sont pliées vers l'extérieur au niveau des côtés d'extrémité de la partie de collet (24) de manière essentiellement en U de sorte à être décalées de façon parallèle l'une par rapport à l'autre, dans laquelle les branches de ressort (22, 23) forment une attache de retenue de garniture de friction (25, 26) sur chaque pièce d'extrémité, et dans laquelle chaque attache de retenue de garniture de friction (25, 26) sert à la fixation entre une branche de ressort (22, 23) et une garniture de friction (2, 3), **caractérisée en ce que** l'attache de retenue de garniture de friction (25, 26) se fixe par serrage dans la plaque de support à garniture de friction (7).

2. Utilisation selon la revendication 1, **caractérisée en ce que** chaque attache de retenue de garniture de friction (25, 26) est fixée de manière ajustée en forme à une plaque de support à garniture de friction (7).

3. Utilisation selon la revendication 1 ou 2, **caractérisée en ce que** les attaches de retenue de garniture de friction (25, 26) de chaque ressort d'espacement (20, 21) sont pourvues de façon opposée et parallèle les unes par rapport aux autres, espacées d'une distance spécifiée, fermées dos à dos, et au moins partiellement ouvertes de façon axiale vers l'extérieur pour recevoir des saillies portant les plaques de support (6, 6'), et dans laquelle les attaches de retenue de garniture de friction (25, 26) viennent en prise à la manière d'une cassette autour des saillies portant les plaques de support (6, 6') sur au moins trois côtés.

4. Utilisation selon une ou plusieurs des revendications 1 à 3, **caractérisée en ce que** chaque attache de retenue de garniture de friction (25, 26) présente une poche (27, 28) destinée à intégrer une broche de retenue (4) ou une broche de guidage (5).

5. Utilisation selon une ou plusieurs des revendications 1 à 4, **caractérisée en ce que** les branches de ressort (22, 23) et la partie de collet (24) sont pourvues de façon symétrique l'une par rapport à l'autre le long d'un axe d'alignement/longitudinal commun.

6. Utilisation selon une ou plusieurs des revendications 1 à 5, **caractérisée en ce que** les attaches de retenue de garniture de friction (25, 26) sont pourvues avec un décalage parallèle par rapport à un axe d'alignement/longitudinal commun.

7. Utilisation selon la revendication 6, **caractérisée en ce que** les deux attaches de retenue de garniture de friction (25, 26) de chaque ressort d'espacement (20, 21) sont pourvues avec un décalage parallèle et d'une manière symétrique en miroir l'une par rapport à l'autre.

8. Ensemble avec un ressort d'espacement (20, 21), des garnitures de frein à disque à garniture partielle (2, 3) et des plaques de support à garniture de friction (7) adjacentes des garnitures de frein à disque à garniture partielle (2, 3), dans lequel le ressort d'espacement (20, 21) est pourvu de deux branches de ressort (22, 23) à des fins de fixation par serrage montée de façon résiliente et élastique entre les deux plaques de support à garniture de friction (7) adjacentes des garnitures de frein à disque à garniture partielle (2, 3), dans lequel le ressort d'espacement (20, 21) est pourvu d'une seule pièce en tant que ressort en arc en tôle d'acier qui a une partie de collet (24), et avec des branches de ressort (22, 23) qui sont pliées vers l'extérieur au niveau des côtés d'extrémité de la partie de collet (24) de manière essentiellement en U de manière à être décalées de façon parallèle l'une par rapport à l'autre, dans lequel les branches de ressort (22, 23) forment une attache de retenue de garniture de friction (25, 26) sur chaque pièce d'extrémité, et dans lequel chaque attache de retenue de garniture de friction (25, 26) sert à la fixation entre une branche de ressort (22, 23) et une garniture de friction (2, 3), **caractérisée en ce que** l'attache de retenue de garniture de friction (25, 26) se fixent par serrage dans la plaque de support à garniture de friction (7).

9. Ensemble selon la revendication 8, **caractérisé en ce que** chaque attache de retenue de garniture de friction (25, 26) est fixée de manière ajustée en forme à une plaque de support à garniture de friction (7).

10. Ensemble selon la revendication 8 ou 9, **caractérisé en ce que** les attaches de retenue de garniture de friction (25, 26) de chaque ressort d'espacement (20, 21) sont pourvues de façon opposée et parallèle les unes par rapport aux autres, espacées d'une distance spécifiée, fermées dos à dos, et au moins partiellement ouvertes de façon axiale vers l'extérieur pour recevoir des saillies portant les plaques de support (6, 6'), et dans lequel les attaches de retenue de garniture de friction (25, 26) viennent en prise à la manière d'une cassette autour des saillies portant les plaques de support (6, 6') sur au moins trois côtés.

11. Ensemble selon une ou plusieurs des revendications 8 à 11, **caractérisé en ce que** chaque attache de retenue de garniture de friction (25, 26) présente une poche (27, 28) destinée à intégrer une broche de retenue (4) ou une broche de guidage (5).

12. Ensemble selon une ou plusieurs des revendications 8 à 11, **caractérisé en ce que** les branches de ressort (22, 23) et la partie de collet (24) sont pourvues de façon symétrique l'une par rapport à l'autre le long d'un axe d'alignement/longitudinal commun.

13. Ensemble selon une ou plusieurs des revendications 8 à 12, **caractérisé en ce que** les attaches de retenue de garniture de friction (25, 26) sont pourvues avec un décalage parallèle par rapport à un axe d'alignement/longitudinal commun.

14. Ensemble selon la revendication 13, **caractérisé en ce que** les deux attaches de retenue de garniture de friction (25, 26) de chaque ressort d'espacement (20, 21) sont pourvues avec un décalage parallèle et d'une manière symétrique en miroir l'une par rapport à l'autre.
